# DEMANDE DE BREVET EUROPEEN

(11) **EP 0 928 766 A1**
(43) Date de publication de la demande: **14.07.1999**
(21) Numéro de dépôt: 99500005.6
(22) Date de dépôt: 12.01.1999
(51) Int. Cl.: B65H 35/00, B65D 85/672, B65H 49/18

(54) **Distributeur de chewing-gum**

(30) Priorité: 13.01.1998 ES 9800057 U
(71) Demandeur: Sugardam, S.L., 30007 Murcia (ES)
(72) Inventeur: Martinez Lopez, Ma Salud, 30007 Murcia (ES)
(74) Mandataire: Urizar Anasagasti, Jesus Maria

(57) **Abrégé**

Distributeur de chewing-gum qui comprend une pièce sous forme de boitê (1) et à l'intérieur un rouleau de ruban de chewing-gum ou gomme à mâcher (2) monté sur un pivot ou axe central (3) et vers un des côtés, deux rouleaux face â face (4) y (5) entre lesquels conduit ce ruban vers une rainure d'issue (6) située dans cette zone, en faisant tourner tout simplement un de ceux-ci à l'aide d'un bouton ou disque extérieur (7).

## Description

La présente invention comme son nom l'indique, concerne un élément qui permet à partir d'un rouleau de ruban de chewing-gum ou gomme à mâcher, de fournir des portions de la longueur souhaitée dans chaque cas, tandis que ce rouleau est préservé de la saleté et autres agents, étant introduit dans une boîte qui présente des moyens de fixation au ceinturon ou toute autre partie du corps.

Le chewing-gum ou gomme à mâcher est normalement distribué en petites pièces de forme généralement parallélépipède. Il existe une autre manière de distribution en ruban qui normalement s'enroule, de laquelle l'utilisateur extrait la portion souhaitée en la coupant avec les mains. Cette dernière option manque de la moindre condition hygiénique requise, non seulement parce qu'il est coupé à la main, mais encore parce qu'il n'y a aucun élément de protection permettant de maintenir le chewing-gum séparé de divers agents polluants et aucune fixation de celui-ci aux vêtements du porteur.

Le distributeur ici préconisé résout favorablement ces problèmes et est structuré à cet effet en une pièce sous forme de boîte qui comprend à l'intérieur un rouleau de ruban de chewing-gum ou gomme à mâcher et vers l'un de ses côtés, deux rouleaux face à face, entre lesquels ledit ruban est conduit vers une rainure d'issue située dans cette zone, en faisant tout simplement tourner l'un d'eux à l'aide d'un bouton ou disque extérieur.

Ce bouton d'actionnement ou le rouleau correspondant, présente de préférence un cliquet qui rend possible sa rotation dans le sens correspondant à la direction de sortie du ruban de chewing-gum ou gomme à mâcher.

Dans la rainure d'issue est placé un couvercle muni de charnières sur un côté, lequel présente sur sa face interne une nervure qui coïncide avec une bavure présente sur un des côtés de la sortie, de sorte qu'au moment de fermer ce couvercle, les deux éléments coupent le ruban de chewing-gum pour permettre sa distribution

Cette boîte sera fabriquée de préférence en matière plastique ou d'autre nature, en conjugant des matériaux opaques, transparents ou de n'importe quelle sorte de couleurs et elle comportera de préférence un élément extérieur sous forme d'attache permettant sa fixation, pendant par exemple du ceinturon d'une poche ou de toute autre partie de vêtement

L'objet de la présente invention sera mieux compris à l'aide de la description suivante réalisée sur la base d'un exemple pratique de réalisation. cette description est effectuée sur la base des dessins du plan en annexe, sur lesquels :

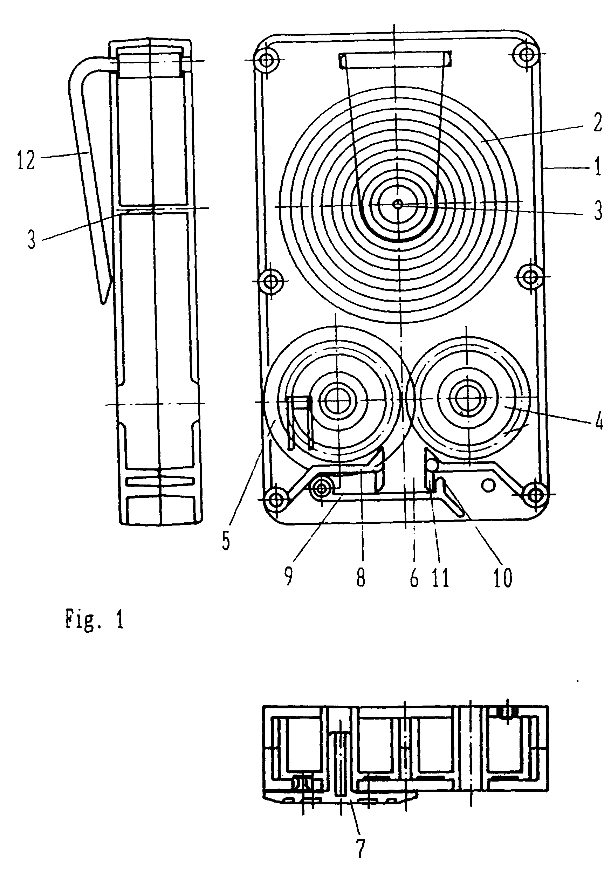

La Figure 1 représente des vues en plan, en élévation et de profil d'une boîte distributrice de chewing-gum faisant l'objet de la présente invention.

L'objet de la présente invention est une boîte (1), fabriquée de préférence en matière plastique ou d'autre nature qui constitue en soi un espace pour contenir à l'intérieur un rouleau de ruban de chewing-gum ou gomme à mâcher (2), dans ce cas monté sur un axe central (3), de sorte qu'en tirant de l'extrémité de ce ruban on extrait la portion souhaitée de ce produit, à travers une rainure ou bouche de sortie (6) située latéralement.

Selon la présente invention, à l'intérieur de cette boite et face à la bouche de sortie (6) sont placés deux rouleaux (4) et (5) face à face, entre lesquels est conduit ce ruban de chewing-gum (2), le dirigeant ou poussant vers la sortie en faisant tourner tout simplement un de ces rouleaux (5) à l'aide d'un bouton ou disque extérieur (7). Afin d'éviter que le ruban de chewing-gum s'introduise de nouveau vers l'intérieur et que sa manipulation soit nécessaire et soit même rendue impossible dans les cas où la boîte ne pourrait être ouverte, la rotation du disque (5) a été prévue seulement dans le sens facilitant la sortie du ruban de chewing-gum; à cet effet, que ce soit sur le bouton d'actionnement ou sur le disque même, a été placé un cliquet (8) qui permet la rotation dans la direction souhaitée tandis qu'elle est inhibée dans la direction inverse

Une fois qu'une portion de ruban de chewing-gum a été extraite du rouleau (2), sortant par la fenêtre (6), il faut couper la portion souhaitée sans avoir à employer les mains ou un élément complémentaire quelconque; pour cela, la fenêtre (6) a été protégée d'un couvercle (9) portant des charnières ou se déplaçant latéralement, présentant à l'extrémité une nervure (10) qui, conjointement avec une bavure (11) existant sur le côté de la fenêtre (6), au moment de fermer le couvercle sur elle, coupe la portion de chewing-gum pour permettre sa distribution.

Comme on l'a déjà indique. ce distributeur est structuré sous forme d'une boîte (1) qui présente une forme quelconque et une taille appropriée à cet effet et qui est réalisée en n'importe quel matériau apte a cela. De préférence sur un de ses plus grands côtés et en tant qu'attache.. a été placé un élément (12) qui permet la fixation de la boîte. pendant des vêtements, par exemple d'une poche, du ceinturon ou de toute autre zone

Nous ne jugeons pas nécessaire de nous étendre davantage sur cette description pour que tout expert en la matière comprenne ia portée de l'invention et les avantages qui en dérivent.

Les termes utilisés pour rédiger ce mémoire devront toujours être pris dans le sens large et non limitatif.

Les matériaux, forme et disposition des éléments seront susceptibles de varier à condition que cela ne suppose pas une altération des caractéristiques essentielles de l'invention qui sont ci-après revendiquées:

## Revendications

1. Distributeur de chewing-gum caractérisé en ce qu'il est structuré en une pièce sous forme de boîte (1) qui comprend à l'intérieur un rouleau de ruban de chewing-gum ou gomme à mâcher (2), monté sur un pivot ou axe central (3) et vers un des côtés, deux rouleaux face à face (4) et (5) entre lesquels est conduit ce ruban vers une rainure d'issue (6) située dans cette zone, en faisant tourner tout simplement un de ceux-ci à l'aide d'un bouton ou disque extérieur (7).

2. Distributeur, selon la revendication précédente, caractérisé en ce que ce bouton ou disque d'actionnement (7) ou le rouleau correspondant (5) présente un cliquet (8) qui rend possible sa rotation seulement dans un sens, correspondant à la direction de sortie du ruban

3. Distributeur, selon les revendications précédentes, caractérisé en ce que la rainure d'issue (6) est protégée par un couvercle (9) portant des charnières sur un côté et présentant sur sa face interne une nervure (10) coïncidant avec une bavure (11) présente sur le bord de la rainure d'issue, de sorte qu'au moment de fermer le couvercle (7), entre les deux éléments (10) et (11) coupent le ruban de chewing-gum en permettant ainsi sa distribution.

4. Distributeur, selon les revendications précédentes, caractérisé en ce que la boîte comporte une attache extérieure (12) qui permet sa fixation en pendant des vêtements.
